(19) 

Europäisches
Patentamt
European
Patent Office
Office européen
des brevets

(11) **EP 3 567 076 A1**

(12) **EUROPEAN PATENT APPLICATION**
published in accordance with Art. 153(4) EPC

(43) Date of publication:
**13.11.2019 Bulletin 2019/46**

(21) Application number: **17890474.4**

(22) Date of filing: **27.12.2017**

(51) Int Cl.:
*C08L 9/00* (2006.01)    *B60C 1/00* (2006.01)
*C08K 3/36* (2006.01)    *C08K 5/3462* (2006.01)

(86) International application number:
**PCT/JP2017/046866**

(87) International publication number:
**WO 2018/128141 (12.07.2018 Gazette 2018/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **06.01.2017 JP 2017001174**

(71) Applicant: **Sumitomo Rubber Industries, Ltd.
Kobe-shi, Hyogo 651-0072 (JP)**

(72) Inventor: **YOSHIYASU, Hayato
Kobe-shi
Hyogo 651-0072 (JP)**

(74) Representative: **TBK
Bavariaring 4-6
80336 München (DE)**

(54) **VULCANIZED RUBBER COMPOSITION AND PNEUMATIC TIRE**

(57)     The present invention provides vulcanized rubber compositions and pneumatic tires which provide improved abrasion resistance. The present invention relates to a vulcanized rubber composition satisfying the following relationships (1) and (2):

$$(1)\ 3.0 \leq M300/M100 \leq 4.7\ \text{(at a temperature of}\ 23 \pm 2°C);$$

and

$$2)\ Hs \geq 55\ \text{(at a temperature of}\ 23 \pm 2°C).$$

EP 3 567 076 A1

**Description**

TECHNICAL FIELD

The present invention relates to vulcanized rubber compositions and pneumatic tires.

BACKGROUND ART

Rubber compositions for use in tire components such as treads require abrasion resistance, and various efforts have been made to meet this requirement. In recent years, it has been desirable from an environmental standpoint to impart excellent abrasion resistance.
Patent Literature 1 discloses tires which contain a rubber component, an acid, a nitrogen compound, and a rosin derivative to improve properties such as abrasion resistance. However, there is a need to further improve properties such as abrasion resistance.

CITATION LIST

PATENT LITERATURE

Patent Literature 1: JP 2011-57797 A

SUMMARY OF INVENTION

TECHNICAL PROBLEM

The present invention aims to solve the problem and provide vulcanized rubber compositions and pneumatic tires which provide improved abrasion resistance.

SOLUTION TO PROBLEM

The present invention relates to a vulcanized rubber composition, satisfying the following relationships (1) and (2) :

$$(1)\ 3.0 \leq M300/M100 \leq 4.7\ (\text{at a temperature of } 23 \pm 2°C);$$

and

$$(2)\ Hs \geq 55\ (\text{at a temperature of } 23 \pm 2°C).$$

The vulcanized rubber composition preferably contains a silica having a nitrogen adsorption specific surface area of 150 $m^2$/g or more.
The vulcanized rubber composition preferably satisfies the following relationship (3):

$$(3)\ M300 \leq 12.0\ MPa\ (\text{at a temperature of } 23 \pm 2°C).$$

The vulcanized rubber composition preferably satisfies the following relationship (4):

$$(4)\ TB \times EB/2 \geq 3300\ MPa·\%\ (\text{at a temperature of } 23 \pm 2°C).$$

Another aspect of the present invention relates to a pneumatic tire, including a tread containing the vulcanized rubber composition.

ADVANTAGEOUS EFFECTS OF INVENTION

The vulcanized rubber composition of the present invention which satisfies relationships (1) and (2) provides improved abrasion resistance.

DESCRIPTION OF EMBODIMENTS

The vulcanized rubber composition (rubber composition which has been vulcanized) of the present invention satisfies the following relationships (1) and (2):

$$(1)\ \ 3.0 \leq M300/M100 \leq 4.7 \ (\text{at a temperature of } 23 \pm 2°C);$$

and

$$(2)\ \ Hs \geq 55 \ (\text{at a temperature of } 23 \pm 2°C).$$

Abrasion resistance of rubber compounds for tires has often been evaluated based on M300 (stress at 300% elongation) . However, there are also many cases where abrasion resistance of tires on cars does not correlate with M300, and M300 lacks sufficient correlation. In this context, the present inventor has conducted research focusing on the elongation in the initial portion of a stress-strain curve (SS curve) and found that a rubber compound that shows a slower initial rise in stress has better abrasion resistance, regardless of its M300 value.

Specifically, it is considered that if irregularities in reinforcing strength are present in a rubber compound due to the uneven dispersion of fillers or variations in crosslink density therein, they can act as fracture initiation sites to accelerate abrasion. The uniformity of reinforcement may be determined from the initial rise in stress of a SS curve obtained by tensile testing. In a rubber with less uniformity, its densely reinforced portions will be stretched completely so that an initial rise in stress occurs at an early stage of elongation, while a rubber with more uniformity needs a greater elongation to show an initial rise in stress. Thus, when relationship (1) is ensured (i.e., the initial rise in stress is delayed), for example, by disposing a hard component at the less reinforced portions of a rubber compound to provide uniform reinforcement, abrasion resistance is improved.

Moreover, a predetermined level of abrasion resistance is ensured with a HS (hardness) satisfying relationship (2). Therefore, it is possible for a vulcanized rubber composition satisfying both relationships (1) and (2) to achieve very excellent abrasion resistance.

The vulcanized rubber composition satisfies the following relationship (1):

$$(1)\ 3.0 \leq M300 \ (\text{stress at } 300\% \ \text{elongation (MPa))}/M100 \ (\text{stress}$$
$$\text{at } 100\% \ \text{elongation (MPa))} \leq 4.7 \ (\text{at a temperature of } 23 \pm 2°C).$$

When M300/M100 is within the range indicated above, the initial rise in stress is delayed so that excellent abrasion resistance can be achieved. It is preferably $3.5 \leq M300/M100 \leq 4.4$, more preferably $3.8 \leq M300/M100 \leq 4.2$.

The vulcanized rubber composition preferably satisfies the following relationship (3):

$$(3)\ M300 \leq 12.0 \ MPa \ (\text{at a temperature of } 23 \pm 2°C).$$

When M300 is within the range indicated above, excellent abrasion resistance can be achieved. It is more preferably $M300 \leq 10.0$ MPa, still more preferably $M300 \leq 9.0$ MPa. The lower limit is not particularly critical. To obtain good abrasion resistance, it is preferably $M300 \geq 7.0$ MPa, more preferably $M300 \geq 8.0$ MPa.

M300 and M100 can be measured as described later in EXAMPLES.

The vulcanized rubber composition satisfies the following relationship (2):

$$(2)\ Hs \ (\text{hardness}) \geq 55 \ (\text{at a temperature of } 23 \pm 2°C).$$

When HS is within the range indicated above, excellent abrasion resistance can be achieved. It is preferably $Hs \geq 57$,

more preferably Hs ≥ 60. The upper limit is not particularly critical. To obtain good wet grip performance, it is preferably Hs ≤ 75, more preferably Hs ≤ 70.

Hs can be measured as described later in EXAMPLES.

The vulcanized rubber composition preferably satisfies the following relationship (4):

$$(4)\ \ TB \times EB/2 \geq 3300\ MPa\cdot\%\ \text{(at a temperature of } 23 \pm 2°C).$$

When TB × EB/2 is within the range indicated above, excellent abrasion resistance can be achieved. It is more preferably TB × EB/2 ≥ 3400 MPa·%, still more preferably TB × EB/2 ≥ 3500 MPa·% . The upper limit is not particularly critical. To obtain good abrasion resistance, it is preferably TB × EB/2 ≤ 4200 MPa·%, still more preferably TB × EB/2 ≤ 4000 MPa·%.

The properties of relationships (1) and (2) as well as relationships (3) and (4) may be imparted, e.g. by incorporation of hard components such as polybutadiene rubber containing 1,2-syndiotactic polybutadiene crystals.

Examples of materials that can be used as the rubber component of the vulcanized rubber composition include natural rubber (NR), epoxidized natural rubber (ENR), polyisoprene rubber (IR), polybutadiene rubber (BR), styrene-butadiene rubber (SBR), styrene-isoprene-butadiene rubber (SIBR), ethylene-propylene-diene rubber (EPDM), chloroprene rubber (CR), acrylonitrile butadiene rubber (NBR), and butyl-based rubbers. Among these, BR or SBR is preferred in view of abrasion resistance or the balance between abrasion resistance and wet grip performance.

Any BR may be used including those commonly used in the tire industry. Examples include high-cis 1,4-polybutadiene rubber (high-cis BR), polybutadiene rubber containing 1,2-syndiotactic polybutadiene crystals (SPB-containing BR), modified polybutadiene rubbers (modified BR), and BR synthesized using rare earth catalysts (rare earth-catalyzed BR). SPB-containing BR is preferred among these.

Any SPB-containing BR generally used in the tire industry may be used. Preferred is SPB-containing BR in which 1,2-syndiotactic polybutadiene crystals are chemically bound to and dispersed in BR. The presence of 1,2-syndiotactic polybutadiene crystals improves abrasion resistance.

The melting point of the 1,2-syndiotactic polybutadiene crystals is preferably 180°C or higher, more preferably 190°C or higher. When the melting point is not lower than the lower limit, good abrasion resistance tends to be achieved. The melting point is also preferably 220°C or lower, more preferably 210°C or lower. When the melting point is not higher than the upper limit, the crystals tend to disperse well in the rubber composition.

The amount of the 1,2-syndiotactic polybutadiene crystals in the SPB-containing BR is preferably 2.5% by mass or more, more preferably 10% by mass or more. When the amount is not less than the lower limit, good abrasion resistance tends to be achieved. The amount is also preferably 20% by mass or less, more preferably 18% by mass or less. When the amount is not more than the upper limit, BR tends to disperse well in the rubber composition.

The amount of the SPB-containing BR based on 100% by mass of the rubber component is preferably 5% by mass or more, more preferably 10% by mass or more, but is preferably 40% by mass or less, more preferably 30% by mass or less, still more preferably 20% by mass or less. When the amount is adjusted within the range indicated above, excellent abrasion resistance can be achieved.

In the case where SPB-containing BR is used, high-cis BR may be added as needed.

High-cis BR refers to a BR having a cis content (amount of cis-1,4-butadiene units of the rubber) of 90% by mass or higher. The cis content is preferably 95% by mass or higher, more preferably 97% by mass or higher.

The cis content can be measured by infrared absorption spectrometry.

The combined amount of the SPB-containing BR and high-cis BR based on 100% by mass of the rubber component is preferably 10% by mass or more, more preferably 15% by mass or more, but is preferably 40% by mass or less, more preferably 30% by mass or less. When the combined amount is adjusted within the range indicated above, excellent abrasion resistance can be achieved.

In view of abrasion resistance, the amount of the SPR-containing BR based on 100% by mass of the BR (total BR) in the rubber composition is preferably 40% by mass or more, more preferably 50% by mass or more.

Commercial products of Ube Industries, Ltd., JSR Corporation, Asahi Kasei Corporation, Zeon Corporation, etc. may be used as the BR.

Any SBR may be used. Examples include emulsion-polymerized styrene butadiene rubber (E-SBR) and solution-polymerized styrene butadiene rubber (S-SBR). The SBR may be either unmodified or modified.

The amount of the SBR based on 100% by mass of the rubber component is preferably 30% by mass or more, more preferably 50% by mass or more, still more preferably 60% by mass or more, but is preferably 95% by mass or less, more preferably 90% by mass or less. When the amount is adjusted within the range indicated above, excellent abrasion resistance and balance of the properties can be achieved. When the amount is adjusted within the range indicated above, excellent abrasion resistance and balance of the properties can be achieved.

Commercial products manufactured or sold by Sumitomo Chemical Co., Ltd., JSR Corporation, Asahi Kasei Corporation, Zeon Corporation, etc. may be used as the SBR.

The ratio of the SPB-containing BR to the SBR (the mass ratio of the amount of the SPB-containing BR/the amount of the SBR) is preferably 5/95 to 50/50, more preferably 10/90 to 40/60, in view of abrasion resistance and the balance of the properties.

The vulcanized rubber composition preferably contains carbon black. Non-limiting examples of the carbon black include N134, N110, N220, N234, N219, N339, N330, N326, N351, N550, and N762. These may be used alone or in combinations of two or more.

The carbon black preferably has a nitrogen adsorption specific surface area ($N_2SA$) of 5 $m^2/g$ or more, more preferably 50 $m^2/g$ or more, still more preferably 100 $m^2/g$ or more, particularly preferably 110 $m^2/g$ or more. When the $N_2SA$ is not lower than the lower limit, good abrasion resistance tends to be achieved. The $N_2SA$ is also preferably 200 $m^2/g$ or less, more preferably 150 $m^2/g$ or less, still more preferably 130 $m^2/g$ or less. Carbon black having a $N_2SA$ of not higher than the upper limit tends to disperse well.

The nitrogen adsorption specific surface area of the carbon black can be measured in accordance with JIS K6217-2:2001.

Commercial products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. may be used as the carbon black.

The amount of the carbon black per 100 parts by mass of the rubber component is preferably 1 part by mass or more, more preferably 3 parts by mass or more, but is preferably 10 parts by mass or less, more preferably 8 parts by mass or less. An amount falling within the range indicated above tends to ensure reinforcement, resulting in good abrasion resistance.

The vulcanized rubber composition preferably contains silica. Examples of the silica include dry silica (anhydrous silica) and wet silica (hydrous silica). Wet silica is preferred because it contains a larger number of silanol groups.

The silica preferably has a nitrogen adsorption specific surface area ($N_2SA$) of 100 $m^2/g$ or more, more preferably 150 $m^2/g$ or more, still more preferably 180 $m^2/g$ or more. The $N_2SA$ is preferably 500 $m^2/g$ or less, more preferably 300 $m^2/g$ or less. When the $N_2SA$ is adjusted within the range indicated above, good abrasion resistance tends to be achieved.

The nitrogen adsorption specific surface area of the silica is measured by the BET method in accordance with ASTM D3037-81.

Commercial products of Degussa, Rhodia, Tosoh Silica Corporation, Solvay Japan, Tokuyama Corporation, etc. may be used as the silica.

The amount of the silica per 100 parts by mass of the rubber component is preferably 30 parts by mass or more, more preferably 50 parts by mass or more. When the amount is not less than the lower limit, the effects of the present invention can be sufficiently achieved. The amount is also preferably 100 parts by mass or less, more preferably 75 parts by mass or less. When the amount is not more than the upper limit, the silica can easily disperse uniformly in the rubber composition, resulting in good abrasion resistance.

The combined amount of the carbon black and silica per 100 parts by mass of the rubber component is preferably 40 parts by mass or more, more preferably 55 parts by mass or more, but is preferably 150 parts by mass or less, more preferably 100 parts by mass or less. When the combined amount is adjusted within the range indicated above, good abrasion resistance tends to be achieved.

The ratio of the carbon black to the silica (the mass ratio of the amount of the carbon black/the amount of the silica) is preferably 3/97 to 20/80, more preferably 5/95 to 15/85, in view of abrasion resistance and the balance of the properties.

In the case of the rubber composition containing silica, it preferably contains a silane coupling agent together with the silica to more suitably achieve the effects of the present invention.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Sulfide or mercapto silane coupling agents are preferred among these.

Commercial products of Degussa, Momentive, Shin-Etsu Silicone, Tokyo Chemical Industry Co., Ltd., AZmax.

Co., Dow Corning Toray Co., Ltd., etc. may be used as the silane coupling agent.

The amount of the silane coupling agent per 100 parts by mass of the silica is preferably 3 parts by mass or more, more preferably 5 parts by mass or more. When the amount is 3 parts by mass or more, the effect of the addition of the silane coupling agent tends to be sufficiently achieved. The amount is also preferably 20 parts by mass or less, more preferably 15 parts by mass or less. When the amount is 20 parts by mass or less, an effect commensurate with the amount tends to be sufficiently achieved, and good processability during kneading tends to be obtained.

The vulcanized rubber composition preferably contains sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

Commercial products of Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. may be used as the sulfur.

The amount of the sulfur per 100 parts by mass of the rubber component is preferably 0.5 parts by mass or more, more preferably 0.8 parts by mass or more, but is preferably 10 parts by mass or less, more preferably 5 parts by mass or less, still more preferably 3 parts by mass or less. When the amount is within the range indicated above, the effects of the present invention tend to be well achieved.

The vulcanized rubber composition preferably contains a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. In view of the effects of the present invention, sulfenamide or guanidine vulcanization accelerators are preferred among these.

The amount of the vulcanization accelerator per 100 parts by mass of the rubber component is preferably 1 part by mass or more, more preferably 3 parts by mass or more, but is preferably 10 parts by mass or less, more preferably 7 parts by mass or less. When the amount is within the range indicated above, the effects of the present invention tend to be well achieved.

In addition to the above-mentioned ingredients, the vulcanized rubber composition may contain additives commonly used in the tire industry. Examples include softeners such as oils; organic peroxides; and fillers such as calcium carbonate, talc, alumina, clay, aluminum hydroxide, and mica.

The vulcanized rubber composition may be prepared, for example, by kneading the ingredients using a rubber kneading machine such as an open roll mill or a Banbury mixer, and then vulcanizing the kneaded mixture.

The pneumatic tire of the present invention may be produced by usual methods using an unvulcanized rubber composition containing the above-mentioned ingredients. An unvulcanized rubber composition containing the ingredients may be extruded into the shape of a tire component such as a tread and then assembled with other tire components on a tire building machine in a usual manner to build an unvulcanized tire, which may then be heated and pressurized in a vulcanizer to obtain a tire.

The pneumatic tire of the present invention is suitable for use as a tire for passenger cars, large passenger cars, large SUVs, heavy load vehicles such as trucks and buses, or light tracks.


EXAMPLES


The chemicals used in examples and comparative examples are listed below.

SBR: bound styrene content = 25%, vinyl content = 60%

High-cis BR: cis content = 97% by mass

SPB-containing BR 1: polybutadiene rubber containing 1,2-syndiotactic polybutadiene crystals

SPB-containing BR 2: polybutadiene rubber containing 1,2-syndiotactic polybutadiene crystals

Carbon black 1: $N_2SA$ = 111 m$^2$/g

Carbon black 2: $N_2SA$ = 140 m$^2$/g

Silica 1: $N_2SA$ = 180 m$^2$/g

Silica 2: $N_2SA$ = 200 m$^2$/g

Oil: aromatic process oil

Silane coupling agent: bis(3-triethoxysilylpropyl)tetrasulfide

Wax: SUNNOC wax available from Ouchi Shinko Chemical Industrial Co., Ltd.

Antioxidant 6C: N-phenyl-N'-(1,3-dimethylbutyl)-p-phenylenediamine

Antioxidant RD: poly(2,2,4-trimethyl-1,2-dihydroquinoline)

Stearic acid: stearic acid "TSUBAKI" available from NOF Corporation

Zinc oxide: Ginrein R available from Toho Zinc Co., Ltd.

5% oil-containing powdered sulfur: HK-200-5 (vulcanizing agent, oil content = 5% by mass) available from Hosoi Chemical Industry Co., Ltd.

Vulcanization accelerator CZ: N-cyclohexyl-2-benzothiazylsulfenamide

Vulcanization accelerator DPG: diphenylguanidine

<Examples and Comparative Examples>

According to the formulation shown in Table 1, the chemicals other than the sulfur and vulcanization accelerators were kneaded at 150°C for 5 minutes using a Banbury mixer. To the kneaded mixture were added the sulfur and vulcanization accelerators, and they were kneaded at 80°C for 5 minutes using an open roll mill to prepare a unvulcanized rubber composition.

The unvulcanized rubber composition was press-vulcanized at 170°C for 20 minutes to prepare a vulcanized rubber sheet.

Separately, the unvulcanized rubber composition was formed into a tread shape and assembled with other tire components on a tire building machine, followed by press-vulcanization at 170°C for 20 minutes to prepare a test tire (tire size: 11×7.10-5).

The vulcanized rubber sheets and test tires prepared as above were evaluated as described below. Table 1 shows the results.

(Hs)

The hardness (Hs) of test specimens of the vulcanized rubber sheets was measured (at a temperature of 23°C ± 2°C) using a type A durometer in accordance with JIS K 6253 "Rubber, vulcanized or thermoplastic - Determination of hardness".

(M100 and M300)

No. 3 dumbbell specimens of the vulcanized rubber sheets were subjected to tensile testing at a tensile rate of 500 mm/min in accordance with JIS K6251 "Rubber, vulcanized or thermoplastic - Determination of tensile stress-strain properties". The stress at 100% elongation (M100 (MPa)) and stress at 300% elongation (M300 (MPa)) at 23°C ± 2°C were measured to determine M300/M100.

(Fracture properties)

No. 3 dumbbell specimens of the vulcanized rubber sheets were subjected to tensile testing at a tensile rate of 500 mm/min in accordance with JIS K6251 "Rubber, vulcanized or thermoplastic - Determination of tensile stress-strain properties". The tensile strength at break TB (MPa) and elongation at break EB(%) at 23°C ± 2°C were measured to determine TB × EB/2 (MPa·%).

(Abrasion resistance)

Each set of test tires were mounted on a front-engine, rear-wheel-drive car of 2000 cc displacement made in Japan. The car was run on a test track in dry asphalt conditions. Then, the remaining groove depth in the tire tread rubber was measured to evaluate abrasion resistance. A greater remaining groove depth means better abrasion resistance. The remaining groove depths are expressed as an index, with Comparative Example 1 set equal to 100. A larger index value indicates better abrasion resistance.

(Wet-skid resistance)

Each set of test tires were mounted on the wheels of a front-engine, front-wheel-drive car of 2000 cc displacement made in Japan. The braking distance was measured which was the distance required for the car to stop after the brakes were applied at 100 km/h in wet asphalt conditions. The braking distances are expressed as an index using the equation below, with Comparative Example 1 set equal to 100. A larger index value indicates better wet-skid resistance (wet grip performance).

# EP 3 567 076 A1

(Wet-skid resistance index) = (braking distance of Comparative Example 1)/(braking distance of each formulation example) × 100

[Table 1]

| | | Comparative Example | | | | | | Example | | | | | | | | |
|---|---|---|---|---|---|---|---|---|---|---|---|---|---|---|---|---|
| | | 1 | 2 | 3 | 4 | 5 | 6 | 1 | 2 | 3 | 4 | 5 | 6 | 7 | 8 | 9 |
| Formulation (parts by mass) | SBR | 90 | 80 | 70 | 95 | 50 | 50 | 90 | 80 | 70 | 60 | 80 | 60 | 80 | 80 | 80 |
| | High-cis BR | 10 | 20 | 30 | | | 25 | | | | | 10 | 20 | | | |
| | SPB-containing BR 1 | | | | 5 | 50 | 25 | 10 | 20 | 30 | 40 | 10 | 20 | | 20 | 20 |
| | SPB-containing BR 2 | | | | | | | | | | | | | 20 | | |
| | Carbon black 1 | 5 | 5 | 5 | 5 | 5 | 5 | 5 | 5 | 5 | 5 | 5 | 5 | 5 | | 8 |
| | Carbon black 2 | | | | | | | | | | | | | | 5 | |
| | Silica 1 | 75 | 75 | 75 | 65 | 65 | 65 | 65 | 65 | 65 | 65 | 65 | 65 | 65 | | 60 |
| | Silica 2 | | | | | | | | | | | | | | 65 | |
| | Oil | 23 | 23 | 23 | 28 | 28 | 23 | 28 | 28 | 28 | 28 | 23 | 23 | 28 | 28 | 28 |
| | Silane coupling agent | 6 | 6 | 6 | 5.2 | 5.2 | 5.2 | 5.2 | 5.2 | 5.2 | 5.2 | 5.2 | 5.2 | 5.2 | 5.2 | 5.2 |
| | Wax | 2 | 2 | 2 | 2 | 2 | 2 | 2 | 2 | 2 | 2 | 2 | 2 | 2 | 2 | 2 |
| | Antioxidant 6C | 2 | 2 | 2 | 2 | 2 | 2 | 2 | 2 | 2 | 2 | 2 | 2 | 2 | 2 | 2 |
| | Antioxidant RD | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | Stearic acid | 2 | 2 | 2 | 2 | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 | 2 | 2 | 2 | 2 |
| | Sulfur | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 |
| | Vulcanization accelerator CZ | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator DPG | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 |
| Evaluation | M300/M100 | 4.9 | 4.7 | 4.5 | 4.5 | 2.8 | 2.9 | 4.3 | 4.0 | 3.6 | 3.3 | 4.1 | 3.5 | 4.1 | 3.8 | 3.7 |
| | M300 (MPa) | 13.5 | 12.8 | 12.3 | 12.3 | 7.3 | 7.9 | 11.4 | 10.8 | 10.1 | 9.3 | 11.5 | 9.8 | 10.5 | 11.0 | 10.2 |
| | Hs | 65 | 62 | 55 | 63 | 71 | 66 | 63 | 64 | 68 | 70 | 65 | 66 | 65 | 65 | 63 |
| | TB × EB/2 (MPa·%) | 4320 | 4150 | 4030 | 4260 | 3210 | 3110 | 3850 | 3780 | 3660 | 3550 | 3850 | 3720 | 3960 | 3960 | 3700 |
| | Abrasion resistance | 95 | 100 | 104 | 90 | 109 | 108 | 100 | 105 | 109 | 115 | 103 | 111 | 107 | 108 | 104 |
| | Wet grip performance | 98 | 94 | 90 | 100 | 82 | 83 | 100 | 96 | 91 | 87 | 96 | 88 | 93 | 93 | 96 |

As shown in Table 1, the vulcanized rubber compositions of the examples had excellent abrasion resistance and balance between abrasion resistance and wet grip performance as compared to the comparative examples.

## Claims

1. A vulcanized rubber composition, satisfying the following relationships (1) and (2):

(1) $3.0 \leq M300/M100 \leq 4.7$ (at a temperature of $23 \pm 2°C$);

and

(2) $Hs \geq 55$ (at a temperature of $23 \pm 2°C$).

2. The vulcanized rubber composition according to claim 1,
wherein the vulcanized rubber composition comprises a silica having a nitrogen adsorption specific surface area of 150 $m^2/g$ or more.

3. The vulcanized rubber composition according to claim 1 or 2,

wherein the vulcanized rubber composition satisfies the following relationship (3):

$$(3)\ M300 \leq 12.0\ MPa\ (at\ a\ temperature\ of\ 23 \pm 2°C).$$

4. The vulcanized rubber composition according to any one of claims 1 to 3,
wherein the vulcanized rubber composition satisfies the following relationship (4):

$$(4)\ TB \times EB/2 \geq 3300\ MPa \cdot \%\ (at\ a\ temperature\ of\ 23 \pm 2°C).$$

5. A pneumatic tire, comprising a tread comprising the vulcanized rubber composition according to any one of claims 1 to 4.

<table>
<tr><td colspan="2" align="center">**INTERNATIONAL SEARCH REPORT**</td><td colspan="2">International application No.<br>PCT/JP2017/046866</td></tr>
</table>

A. CLASSIFICATION OF SUBJECT MATTER
Int.Cl. C08L9/00(2006.01)i, B60C1/00(2006.01)i, C08K3/36(2006.01)i,
C08K5/3462(2006.01)i

According to International Patent Classification (IPC) or to both national classification and IPC

B. FIELDS SEARCHED

Minimum documentation searched (classification system followed by classification symbols)
Int.Cl. C08L9/00, B60C1/00, C08K3/36, C08K5/3462

Documentation searched other than minimum documentation to the extent that such documents are included in the fields searched
Published examined utility model applications of Japan       1922-1996
Published unexamined utility model applications of Japan     1971-2018
Registered utility model specifications of Japan             1996-2018
Published registered utility model applications of Japan     1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-263882 A (SUMITOMO RUBBER INDUSTRIES, LTD.) 28 September 1999, claim 3, paragraph [0035], example 2, comparative examples 1, 3-6, 9, tables 1, 2 (Family: none) | 1-5 |
| X | JP 10-87890 A (GOODYEAR TIRE AND RUBBER) 07 April 1998, claims, paragraph [0077], example 5, tables 1, 2 & US 5708053 A, claims, column 12, lines 28-40, example 5, tables 1, 2 & EP 824133 A1 & BR 9704277 A & CA 2209350 A & MX 9705947 A | 1-5 |

☒   Further documents are listed in the continuation of Box C.        ☐   See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 March 2018 | 27 March 2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2017/046866

C (Continuation).   DOCUMENTS CONSIDERED TO BE RELEVANT

| Category* | Citation of document, with indication, where appropriate, of the relevant passages | Relevant to claim No. |
|---|---|---|
| X | JP 9-118784 A (GOODYEAR TIRE AND RUBBER) 06 May 1997, claims, paragraph [0046], examples 1-14, tables 1-4 & US 5616655 A & EP 765904 A1, claims, column 8, lines 56-67, examples 1-14, tables 1-4 & BR 9603720 A & CA 2168696 A & CA 2168696 A1 | 1-5 |
| X | JP 2010-518229 A (MOMENTIVE PERFORMANCE MAT INC.) 27 May 2010, claims, paragraph [0081], example 2, comparative examples 2, 3, table 3 & US 2008/0194746 A1 & WO 2008/097587 A1, claims, paragraph [0077], example 2, comparative examples 2, 3, table 3 & CN101641226 A & AT 488381 T & TW 200904875 A & CN 102432924 A & HK 1140729 A | 1-5 |
| X | JP 2011-502124 A (MOMENTIVE PERFORMANCE MAT INC.) 20 January 2011, claims, paragraph [0108], example 4, comparative examples 3, 4, tables 1, 3 & US 2009/0111923 A1 & WO 2009/058373 A2, claims, paragraph [0102], example 4, comparative examples 3, 4, tables 1, 3 & CN 101910185 A & TW 200940557 A | 1-5 |
| X | JP 2007-514022 A (LANXESS INC.) 31 May 2007, claims, paragraph [0061], examples 1-4, tables 1, 2 & US 2008/0242771 A1 & WO 2005/056664 A1, claims, page 18, lines 18-22, examples 1-4, tables 1, 2 & CA 2452910 A & CA 2452910 A1 | 1-5 |
| X | JP 2003-238752 A (BAYER INC.) 27 August 2003, claim 10, examples 1b, 1c, 2a, 2b, 2d, 3d, 3e, 4d, 5d, 5e, tables 1-10 & US 2003/0171478 A1 & EP 1329479 A1, claim 10, examples 1b, 1c, 2a, 2b, 2d, 3d, 3e, 4d, 5d, 5e, tables 1-10 & BR 300060 A & CN 1432591 A & TW 200307717 A & CA 2368363 A1 | 1-5 |
| X | WO 2016/105909 A1 (ARIZONA CHEMICAL COMPANY, LLC) 30 June 2016, claims, page 24, lines 1-9, example 2, tables 1-4 & US 2017/0283593 A1 & TW 201631001 A | 1-5 |
| X | JP 2001-279028 A (DEGUSSA) 10 October 2001, claims 1-9, paragraphs [0031], [0047], examples (H), (I), (O), (P), tables 1-7 & US 2001/0051684 A1, claims 1-9, paragraphs [0048], [0058], examples (H), (I), (O), (P), tables 1-7 & EP 1142948 A2 & DE 10015309 A | 1-5 |
| A | JP 2016-65160 A (SUMITOMO RUBBER INDUSTRIES, LTD.) 28 April 2016, paragraph [0060] & US 2016/0090474 A1, paragraph [0059] & EP 3000616 A1 & CN 105462007 A | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011057797 A